# EUROPEAN PATENT APPLICATION

(11) **EP 2 708 702 A2**
(43) Date of publication of application: **19.03.2014**
(21) Application number: 13183764.3
(22) Date of filing: 10.09.2013
(51) Int. Cl.: F01D 25/18, F02C 7/32

(54) **Pressurization of Generator**

(30) Priority: 14.09.2012 US 201213617101
(71) Applicant: Pratt & Whitney Canada Corp., Longueuil, Québec J4G 1A1 (CA)
(72) Inventor: Barnett, Barry, (01BE5) Longueuil, Québec J4G 1A1 (CA); Sivalingam, Dileepan, (01BE5) Longueuil, Québec J4G 1A1 (CA); Alecu, Daniel, (01BE5) Longueuil, Québec J4G 1A1 (CA); Liu, Xiaoliu, (01BE5) Longueuil, Québec J4G 1A1 (CA); Ferch, Gordon, (01BE5) Longueuil, Québec J4G 1A1 (CA); Forgione, Carmine, (01BE5) Longueuil, Québec J4G 1A1 (CA)
(74) Representative: Hull, James Edward

(57) **Abstract**

A system for pressurizing a generator (30) in a gas turbine engine (10) includes a fluid valve (34) for permitting or inhibiting airflow into a housing of the generator (30). The fluid valve (34) may be in fluid communication with an air source (14) within the engine (10), and may be configured to permit airflow into the housing of the generator (30) when pressure within the housing is below a preset pressure threshold or range.

## Description

### TECHNICAL FIELD

The disclosure relates generally to gas turbine engines, and more particularly to pressurization of generators in such engines.

### BACKGROUND OF THE ART

Typical turbine engines include generators that may be air or oil cooled. The internal pressure in the generator typically matches the ambient pressure. At flight altitudes, pressure in the generator may be significantly lower than at ground level, with the result that heat dissipation by the coolant (e.g., air) is reduced. This may negatively impact power generation at high altitudes.

### SUMMARY

The disclosure describes systems and methods for pressurization of generators, such as in turbine engines, in particular aircraft engines. In various aspects and examples, the present disclosure describes engines that provide pressurization of generators, and methods therefor.

In one aspect, there is provided a system for pressurization of a generator in a gas turbine engine, the system may include: a fluid valve for permitting or inhibiting airflow into a housing of the generator, the fluid valve being in fluid communication with an air source within the engine; wherein the fluid valve is configured to permit airflow into the housing of the generator when pressure within the housing is below a preset pressure threshold or range.

In another aspect, there is provided a system for pressurization of a generator in a gas turbine engine, the system may include: a sensor for obtaining a pressure measurement from a housing of the generator; a controllable fluid valve for permitting or inhibiting airflow into the generator, the fluid valve being in fluid communication with an air source within the engine; and a controller configured to execute instructions to cause the controller to: determine whether the pressure measurement is above a pressure threshold or range; and if the pressure measurement is below the pressure threshold or range, cause the controllable fluid valve to permit airflow from the air source into the housing of the generator.

In either of the above aspects, the system may comprise a generator (that may have a housing), and/or an air source located within an engine, and/or an engine comprising the air source.

In another aspect, there is provided a method for pressurization of a generator in a gas turbine engine, the method being implemented in a processor, the method may include: receiving one or more signals indicative of a pressure measurement of a housing of the generator; determining whether the pressure measurement is above a pressure threshold or range; and if the pressure measurement is below the pressure threshold or range, transmit one or more control signals to cause airflow from an air source within the engine into the housing of the generator.

Further details of these and other aspects of the subject matter of this application will be apparent from the detailed description and drawings included below.

### DESCRIPTION OF THE DRAWINGS

Reference is now made to the accompanying drawings, in which:
FIG. 1 shows an axial cross-section view of a turbo-fan gas turbine engine;
FIG. 2 shows a schematic diagram of an example system for generator pressurization; and
FIG. 3 is a flowchart showing an example method for generator pressurization.

### DETAILED DESCRIPTION

Aspects of various embodiments are described through reference to the drawings.

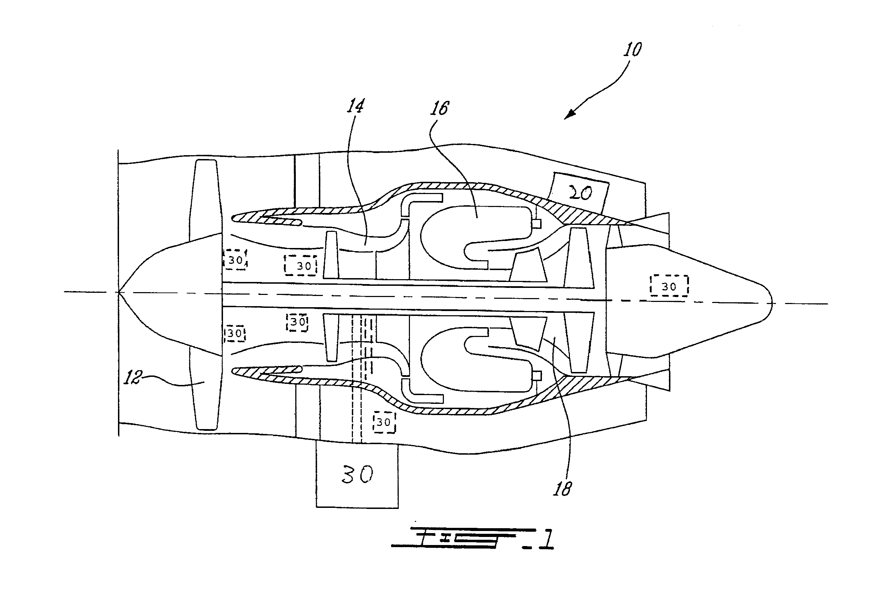

Fig.1 illustrates a gas turbine engine 10 of a type preferably provided for use in subsonic flight, generally comprising in serial flow communication a fan 12 through which ambient air is propelled, a multistage compressor 14 for pressurizing the air, a combustor 16 in which the compressed air is mixed with fuel and ignited for generating an annular stream of hot combustion gases, and a turbine section 18 for extracting energy from the combustion gases. A generator 30 may further extract power from the engine 10. In some examples, generator 30 may be as shown in a tower-shaft arrangement. In some examples (not shown), generator 30 may be installed in the exhaust cone of engine 10, and may be coupled directly to the low pressure spool of engine 10.

Gas turbine engine 10 may comprise a turbofan engine for use in an aircraft application. Engine 10 may comprise one or more control device(s) 20 which may automatically regulate at least some aspect(s) of the operation of engine 10 based on one or more input variable(s). Control device(s) 20 may, for example, be configured to receive multiple input variables representative of current flight conditions including, for example, air density, total temperature of inlet air, throttle lever position, engine temperatures, engine pressures, vibration levels and potentially many other parameters. For example, the control device(s) 20 may monitor and/or control pressurization of generator 30, as described further below.

Accordingly, control device(s) 20 may receive one or more signal(s) from one or more sensor(s) positioned throughout the engine 10 associated with various aspects of the operation of engine 10. For example, control device(s) 20 may receive signal(s) from one or more pressure sensors (described further below) indicative of pressure measurements within generator 30. Such signal(s) may be received as input(s) by control device(s) 20 and analyzed by one or more automatic data processor(s) according to stored machine-readable instructions. Engine parameters such as fuel flow, stator vane position, bleed valve position, generator pressure and others may be computed or otherwise determined from this input data and applied as appropriate by, for example, generating suitably-configured output signal(s) and providing them to relevant device(s) associated with the engine 10.

In various embodiments, control device(s) 20 may include or form part of a Full Authority Digital Engine Control (FADEC) which may, for example, comprise one or more digital computer(s) or other data processor(s), sometimes referred to as electronic engine controller(s) (EEC) and related accessories that control at least some aspects of performance of engine 10. Control device(s) 20 may for example be configured to make decisions regarding the control of engine 10 until a pilot wishes to or is required to intervene. Control device(s) 20 may be configured to provide optimum engine efficiency for a given flight condition. As data processors, control device(s) 20 may include one or more microcontroller or other suitably programmed or programmable logic circuits.

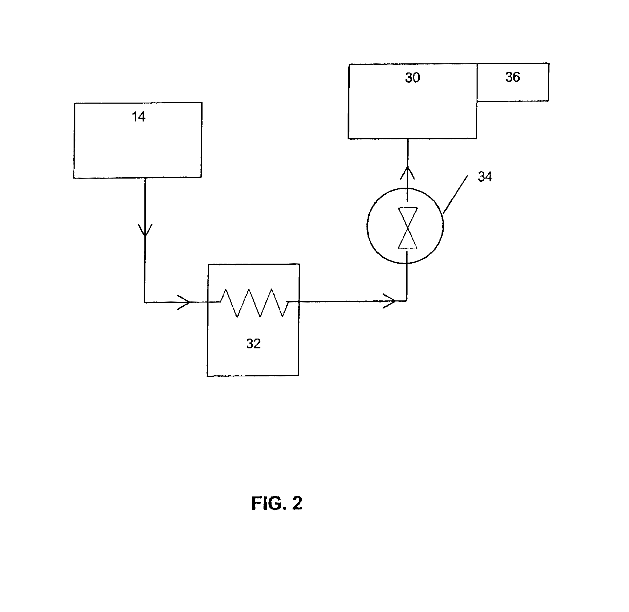

Engine 10 may also comprise an air coolant system (see FIG. 2) for cooling the generator 30. The air coolant system may direct air, or other gas, through the generator housing, to enable convection cooling of the generator. The air coolant system may be connected to a source of pressurized air within engine 10, such as compressor 14. Other sources of pressurized air may be used, including one or more pumps (not shown) within engine 10, for example. A heat exchanger 32 may cool air going to generator 30. A controllable fluid valve 34 may control (e.g., inhibit or permit) flow of air into the generator 30. Valve 34 may serve to regulate pressure within the housing of the generator 30, including pressurization and depressurization of the housing, as appropriate. In some examples, valve 34 may be self-controlled (e.g., a pressure regulating valve, such as a fixed setting pressure regulating valve) or may be controlalble with external commands received from a controller, such as control device(s) 20 (e.g., an engine FADEC).

For example, a fluid conduit (e.g., including one or more tubes and/or passageways in engine 10) may conduct fluid, such as air, from compressor 14 to generator 30, via heat exchanger 32 and valve 34. The air may be introduced into a housing of generator 30. Valve 34 may be operable to permit air to be supplied from compressor 14 to the housing, and may also be operable to close the air supply from compressor 14 and vent to ambient pressure.

Optionally a sensor 36, which may be mounted in, on or near generator 30, may detect the pressure in generator 30 continuously, intermittently, periodically and/or at preset times, for example. Sensor 36 may be any suitable pressure sensor. When the detected pressure in the housing of generator 30 drops below a preset pressure threshold and/or a desired pressure range (e.g., as engine 10 reaches higher altitudes, such as during a flight), valve 34 may (e.g., in response to control signal(s) from control device(s) 20 or according to its own preset configuration) allow compressed fluid (e.g., air) from compressor 14 into the housing of generator 30 in order to internally pressurize generator 30, until the pressurization of the housing exceeds the preset pressure threshold and/or reaches a desired pressure range. The preset pressure threshold and/or desired pressure range may be slightly higher than the ambient pressure (e.g., about 2-5 psi (13.79-34.48 kPa) above the ambient pressure at high altitudes). This may require only a relatively small amount of air to be introduced into the housing of generator 30. This low pressurization level may be sufficient to achieve satisfactory generator performance, and may be independent of the engine type.

In some examples, such as where valve 34 is a fixed setting pressure valve, sensor 36 may not be required, and valve 34 may operate independently of control device(s) 20. For example, valve 34 may be preconfigured to maintain a preset pressure range in the generator housing that is slightly higher (e.g., 2-5 psi higher) than ambient pressure at high altitudes. Valve 34 may thus automatically enable airflow from compressor 14 into the generator housing when pressure in the housing drops below a preset pressure range, automatically stop the airflow when pressure in the housing is within a preset pressure range, and optionally vent the housing when pressure in the housing is above a preset pressure range.

This slight pressurization (e.g., 2-5 psi (13.79-34.48 kPa) above ambient pressure at high altitudes) may also be sufficient to avoid, minimize or reduce Corona discharge and/or to dissipate heat from any hotspots of generator 30 (e.g., end windings and/or ferromagnetic cores) by convection (e.g., created by the generator rotor).

The housing of generator 30 may be configured to preserve pressurization of generator 30. For example, the generator housing may be relatively air-tight in order to reduce unintended air loss. In some examples, the generator housing may be a pressurized cavity, as described further below.

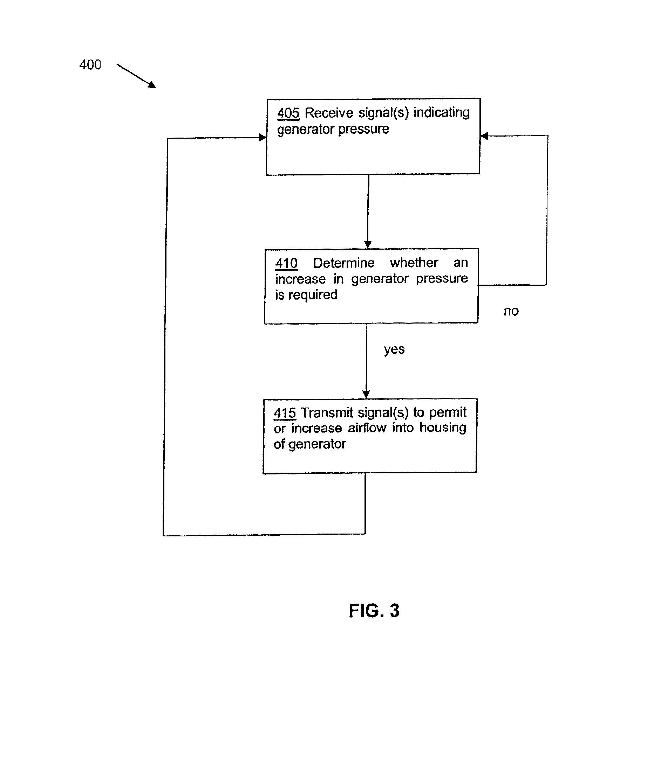

FIG. 3 is a flowchart illustrating an example method 400 for pressurization of a generator. Method 400 may be implemented by control device(s) 20, such as while engine 10 is in flight.

At 405, one or more signals are received (e.g., from sensor 36) indicative of a pressure measurement in the housing of generator 30. The signal(s) may be received continuously, intermittently, periodically and/or at preset times, for example. In some examples, the signal(s) may be received in response to an inquiry or request by the control device(s) 20. In some examples, the signal(s) may be received without any inquiry or request from the control device(s) 20. In some examples, the signal(s) may be regularly transmitted to control device(s) 20 by sensor 36, and additionally control device(s) 20 may request updated pressure measurements (e.g., in response to a detected change in the state of engine 10, such as when engine 10 has passed a certain altitude threshold).

At 410, it is determined whether an increase in generator pressure is required. For example, the pressure measurement may be compared against a preset threshold and/or pressure range. The preset threshold and/or pressure range may be different depending on engine 10 and/or operating conditions, for example. In some examples, in addition to determining whether an increase in pressure is needed, there may also be a determination of the amount of increase in pressure needed.

If an increase in generator pressure is not required (e.g., the generator pressurization is sufficiently above a threshold value or is within the preset pressure range), no action may be required, and method 400 may return to 405 to continue monitoring generator pressure. If an increase in generator pressure is required (e.g., the generator pressure is below a threshold value or preset range), method 400 may proceed to 415.

At 415, when it is determined that an increase in generator pressure is required, one or more signals may be transmitted (e.g., by control device(s) 20) to permit airflow to the housing of generator 30, in order to pressurize generator 30. For example, control device(s) 20 may transmit control signal(s) to valve 34 to cause valve 34 to permit greater airflow into the housing of generator 30. Method 400 may then return to 405 to continue monitoring generator pressure.

At 415, control signal(s) may cause valve 34 to continuously permit airflow into the housing of generator 30 until generator pressure is determined to be sufficient, in a later instance of 405 and 410. Alternatively, control signal(s) may cause valve 34 to permit a limited amount of airflow (e.g., valve 34 is opened for a set amount of time), and 405 and 410 may be repeated to determined whether generator pressure has been sufficiently increased. Other methods of adjusting generator pressure may be suitable.

In some examples, where valve 34 is a self-operating fixed setting pressure valve, some or all of method 400 may not be carried out and/or may be carried out only by valve 34. For example, valve 34 may be configured to permit airflow (or permit greater airflow) to the housing of the generator 30 when pressure within the housing is sensed (e.g., by valve 34) to be below the preset pressure threshold or range of valve 34. Similarly, valve 34 may be configured to vent air from the housing when pressure within the housing is sensed (e.g., by valve 34) to be above a preset pressure threshold or range of valve 34.

In various example embodiments, the present disclosure may enable control of pressurization within generator 30 of engine 10, where the pressurization is relatively small (e.g., 2-5 psi (13.79-34.48 kPa) above ambient pressure) and thus may be achieved with a relatively small amount of air. The small amount of air required for pressurization may require relatively little cooling. Internal pressurization of generator 30 may also be useful for avoiding, minimizing or decreasing Corona discharges, and may allow for operation of generator 30 at increased average temperatures with fewer or no hot spots that may otherwise exceed the Currie point of the core's or the winding's insulator limit.

In various example embodiments, a relatively small amount of air is required for pressurization of generator 30. Because a relatively small amount of air is required, cooling of the air may be achieved using a relatively small, compact and/or light heat exchanger 32 and/or pump. This may be useful to reduce costs, size and/or weight of the components, which may be useful when used in aircrafts.

In some examples, compressor 14 has been described as being a source of pressurized air. In other examples, other air sources within the engine may be used for pressurized air, for example an air compressor internal to generator 30 may be provided. Other sources of pressurized air may be suitable.

In some examples, generator 30 may be positioned in a pressurized cavity to achieve similar results. For example, generator 30 may be positioned in an engine bypass duct (e.g., in the exhaust tail cone), in an engine auxiliary gear box (AGB), in an engine bearing cavity, or any other existing or newly designed enclosure that may be in fluid communication with any of the above-mentioned cavities. Some example positions for generator 30 are shown in dotted line in FIG. 1. In some examples, positioning generator 30 in a pressurized cavity may be in addition to controlling pressure within the pressurized cavity, for example as described above.

The disclosed methods, such as the example method 400 described above, may be implemented using control device(s). Control device(s) 20 may comprise memory(ies) and memory data devices or register(s). Memory(ies) may comprise any storage means (e.g. devices) suitable for retrievably storing machine-readable instructions executable by processor(s). Memory(ies) may be non-volatile. For example, memory(ies) may include erasable programmable read only memory (EPROM) and/or flash memory. Memory(ies) may contain machine-readable instructions for execution by processor(s). Such machine-readable instructions may cause the digital processor(s) to: detect, based on sensed signal(s), a change in the pressure in the housing of generator 30; and produce control signal(s) for adjusting airflow to the housing of generator 30, in order to adjust pressurization of generator 30, for example.

Memory(ies) may comprise any data storage devices suitable for storing data received and/or generated by processor(s), preferably retrievably. For example, memory(ies) may comprise one or more of any or all of erasable programmable read only memory(ies) (EPROM), flash memory(ies) or other electromagnetic media suitable for storing electronic data signals in volatile or non-volatile, non-transient form.

The above description is meant to be exemplary only, and one skilled in the art will recognize that changes may be made to the embodiments described without departing from the scope of the invention disclosed. For example, the source of air may be compressor 14, one or more other pumps, or other air sources. Other modifications to the air coolant system may be suitable. One or more steps of method 400 may be omitted and/or additional steps may be included, as suitable. Steps of method 400 may be performed in different orders, as suitable. Still other modifications which fall within the scope of the present invention will be apparent to those skilled in the art, in light of a review of this disclosure, and such modifications are intended to fall within the appended claims.

## Claims

1. A system for pressurization of a generator (30) in a gas turbine engine (10), the system comprising:
a fluid valve (34) for permitting or inhibiting airflow into a housing of a generator (30), the fluid valve (34) being in fluid communication with an air source (14) within an engine (10), wherein the fluid valve (34) is configured to permit airflow into the housing of the generator (30) when pressure within the housing is below a preset pressure threshold or range.

2. A system for pressurization of a generator (30) in a gas turbine engine (10), the system comprising:
a sensor (36) for obtaining a pressure measurement from a housing of the generator (30);
a controllable fluid valve (34) for permitting or inhibiting airflow into the generator (30), the fluid valve (34) being in fluid communication with an air source (14) within the engine (10); and
a controller (10) configured to execute instructions to cause the controller to:
determine whether the pressure measurement is above a pressure threshold or range; and
if the pressure measurement is below the pressure threshold or range, cause the controllable fluid valve (34) to permit airflow from the air source (14) into the housing of the generator (30).

3. The system of claim 1 or 2, wherein the air source is a compressor (14) of the engine (10).

4. The system of claim 3, further comprising a heat exchanger (32) for cooling air flowing from the compressor (14) to the generator (30).

5. The system of any preceding claim, wherein the pressure threshold or range is at least 1 psi (6.895 kPa) above ambient pressure.

6. The system of claim 5, wherein the pressure threshold or range is about 2-5 psi (13.79-34.48 kPa) above the ambient pressure.

7. The system of any preceding claim, wherein the housing of the generator (30) is substantially air-tight.

8. The system of any preceding claim, wherein the housing of the generator (30) is a pressurized cavity.

9. A method for pressurization of a generator (30) in a gas turbine engine (10), the method being implemented in a processor, the method comprising:
receiving one or more signals indicative of a pressure measurement of a housing of the generator (30);
determining whether the pressure measurement is above a pressure threshold or range; and
if the pressure measurement is below the pressure threshold or range,
transmitting one or more control signals to cause airflow from an air source (14) within the engine (10) into the housing of the generator (30).

10. The method of claim 9, wherein the one or more control signals cause a controllable fluid valve (34) to permit airflow into the housing of the generator (30).

11. The method of claim 9 or 10, wherein the pressure threshold or range is at least 1 psi (6.895) above ambient pressure.

12. The method of any of claims 9 to 11, wherein the pressure threshold or range is about 2-5 psi above the ambient pressure.

13. The method of any of claims 9 to 12, wherein the air source is a compressor of the engine.
